# EUROPÄISCHE PATENTSCHRIFT

(11) **EP 4 567 190 B1**
(45) Veröffentlichungstag und Bekanntmachung des Hinweises auf die Patenterteilung: **03.06.2026**
(21) Anmeldenummer: 24216712.0
(22) Anmeldetag: 02.12.2024
(51) Int. Cl.: E01B 27/16, B60K 6/12, F04B 1/053, F04B 9/04, F04B 17/03, F16H 61/4096

(54) **EXZENTERWELLENANTRIEB VON STOPFAGGREGATEN**
ECCENTRIC SHAFT DRIVE FOR TAMPING UNITS
ENTRAÎNEMENT À ARBRE EXCENTRIQUE POUR DISPOSITIFS DE BOURRAGE

(30) Priorität: 05.12.2023 AT 509782023
(43) Veröffentlichungstag der Anmeldung: 11.06.2025
(73) Patentinhaber: Plasser & Theurer Export von Bahnbaumaschinen Gesellschaft m.b.H., 1010 Wien (AT)
(72) Erfinder: Höfler, Florian, 4150 Rohrbach/Berg (AT); Fries, Clemens, 4211 Alberndorf in der Riedmark (AT); Ecker, Gabriel, 4203 Altenberg bei Linz (AT)

(56) Entgegenhaltungen:
- EP-A1- 4 242 375
- EP-B1- 3 973 255
- EA-B1- 039 948
- GB-A- 1 394 249
- US-A- 4 094 250
- US-A- 4 094 251
- US-A1- 2023 257 939
- US-B2- 11 053 644

## Beschreibung

Die Erfindung betrifft einen Exzenterwellenantrieb mit mindestens einer Exzenterwelle, die dazu vorgesehen ist, paarweise angeordnete Schwenkhebel eines jeweils zugeordneten Stopfaggregats in Schwingungen einer definierten Grundfrequenz zu versetzen, wobei jeweils ein in einem zugordneten Hydraulikkreis angeordneter drehzahlsteuerbarer erster hydraulisch-mechanischer Aktor mit der zugeordneten Exzenterwelle mechanisch gekoppelt ist.

Zur Herstellung einer korrigierten Solllage ausgehend von einer fehlerhaften Istlage der Schienen eines Gleises, dessen Gleisrost auf einer Schotterschicht als Teil des Oberbaus eines Schienenfahrwegs aufliegt, werden nach dem Stand der Technik auf einem Schienenfahrzeug ein oder mehrere in Bezug auf die Gleislängsrichtung hintereinander angeordnete Stopfaggregate eingesetzt.

Ein Stopfaggregat wird zur Bearbeitung der Schotterauflage einer Schwelle des Gleisrostes so weit abgesenkt, dass die paarweise auf Schwenkhebeln angeordneten Stopfpickel, vor und nach der zu berichtigenden Schwelle in die Schotterschicht eintauchen und daraufhin durch mindestens eine ausgeführte Beistellbewegung Teile der Schotterunterlage umlagern und verdichten.

Während der einzelnen Abschnitte eines solchen Stopfzyklus werden die Stopfpickel mittels auf der den Stopfpickeln abgewandten Seite der Schwenkhebel aufgebrachten Kraftwirkungen in Schwingungen mit vom Arbeitsschritt abhängigen voneinander verschiedenen Grundfrequenzen versetzt.

So werden die Stopfpickel beim Absenken und Anheben des Stopfaggregats, bevor sie in die Schotterschicht eintauchen und nachdem sie die Schotterschicht verlassen haben, beispielsweise mit einer Grundfrequenz von 28Hz beaufschlagt.

Im Schotterbett wird diese Grundfrequenz auf bis zu 45Hz erhöht und bei Beginn der Beistellbewegung wieder auf 35Hz verringert.

Zur Erzeugung dieser Schwingungen wird nach dem Stand der Technik eine Exzenterwelle verwendet, die beidseitig mit den jeweiligen Druckkammerseiten von zwei hydraulischen Beistellzylindern verbunden ist. Die Kolben dieser Beistellzylinder sind hingegen gelenkig mit den in Bezug auf die Stopfpickeln abgewandten Seiten der beiden einander gegenüberliegend angeordneten Schwenkhebel verbunden.

EP 4 242 375 A1 offenbart ein Verfahren zur effizienten Energieversorgung von Arbeitsaggregaten einer Stopfmaschine, wobei die rotatorischen Vibrationsantriebe eines Stopfaggregats mit elektrischer Energie betrieben werden.

EA 039948 B1 zeigt Stopfeinheiten eines Stopfaggregats in kompakter Ausführung mit vertikal angeordneten Beistellantrieben, wobei ein erster Beistellantrieb direkt und eine zweiter darunter angeordneter Beistellantrieb über eine separate Koppeleinheit mit dem Schwingungsantrieb gekoppelt sind.

In US 2023/0257939 A1 ist eine Maschine mit einem Mehrschwellenstopfaggregat mit mehreren hintereinander angeordneten Stopfeinheiten offenbart, umfassend einen an einem Werkzeugträger angeordneten Vibrationsantrieb mit einer Exzenterwelle mit einer ersten und einer zweiten Exzenterscheibe, deren Symmetrieachsen mit einer gemeinsamen Rotationsachse zwei Exzenterebenen aufspannen, die zueinander einen Relativwinkel einschließen und an denen jeweils ein Beistellzylinder angeordnet ist, wobei der Verschleiß reduziert und die Lärmemissionen verringert werden.

US 4, 094, 250 A und US 4,094,251 A offenbaren Gleisstopfmaschinen mit baugleichen Einschwellen- und Mehrschwellstopfaggregaten, mit beistell- und gegebenenfalls vibrierbaren Stopfwerkzeugen.

US 11,053,644 B2 zeigt ein Stopfaggregat mit gegenüberliegenden Stopfwerkzeugen, die jeweils mit einem Beistellzylinder zur Erzeugung einer Beistellbewegung verbunden sind, wobei ein Exzenterantrieb zur Erzeugung einer Vibrationsbewegung mit einem ersten Beistellzylinder mechanisch verbunden ist und eine erste Druckkammer des ersten Beistellzylinders mit einer zweiten Druckkammer eines zweiten Beistellzylinders über eine Verbindungsleitung hydraulisch verbunden ist, um eine in der ersten Druckkammer mittels des Exzenterantriebs erzeugte Druckänderung auf die zweite Druckkammer zu übertragen.

In EP 3 973 255 B1 sind ein Verfahren und eine Vorrichtung zum Steuern/Regeln eines rotatorischen Antriebs eines Arbeitsaggregats einer Gleisbaumaschine offenbart, wobei mittels eines Sensors eine aus einer Rotation des Antriebs abgeleitete Messgröße mit einer annähernd periodischen Verlaufsfunktion erfasst wird und mittels einer Auswerteeinrichtung eine Frequenz oder Periodendauer der Verlaufsfunktion zum Vergleich mit Sollvorgaben erfasst wird, unter Durchführung von Korrelationsverfahren mittels einer Rechnereinheit, die eine Erfassung von Frequenzänderungen zwischen zwei Nulldurchgängen ermöglichen.
Die Exzenterwelle von Stopfaggregaten wird typischerweise mit einem Hydraulikmotor angetrieben, welcher im offen Hydraulikkreis betrieben wird. Um die Drehzahl beeinflussen zu können wird ein Stromregelventil verwendet. Um bei Verringerung der Drehzahl die Entstehung von Kavitationen zu vermeiden, ist zusätzlich ein Freilaufventil notwendig.

GB 1 394 249 A offenbart eine fahrbare Gleisnivellier-Stopfmaschine mit einen Vibrationsantrieb aufweisenden Gleisstopfwerkzeugen mit einer Exzenterwelle, angetrieben durch einen Hydraulikmotor, wobei die Schwingungsfrequenz entweder mittels eines in der Zuleitung zum Hydraulikmotor angeordneten, elektromagnetische verstellbaren Mengenregelventils, z. B. eines Bypassventils, gebildet ist oder durch einen Drehzahlregler für eine Hydraulikpumpe bzw. deren elektrischen Antriebsmotor bestimmt wird.
Das Hydrauliksystem aus Hydraulikpumpe und Hydraulikmotor ist offen und umfasst auch einen Vorratsbehälter aus dem Hydrauliköl gepumpt wird und in den dieses von dem Hydraulikmotor wieder zurückfließt sowie ein Überdruckventil.

Diese Ausführungsform des Exzenterwellenantriebs weist jedoch einen geringen Wirkungsgrad auf, da das Stromregelventil auf eine maximale Drehzahl ausgelegt wird und bei Einstellung einer geringeren Drehzahl ein Teil des Volumenstroms weggedrosselt werden muss.

Auch ein Bremsbetrieb des Hydraulikmotors ist bei diesem Aufbau des Antriebs nicht möglich.

Eine dynamische Regelung der Drehzahl wird durch die hohen Zeitkonstanten dieser Ventilkombination, die u.a. lange Antwortzeiten zur Folge haben, erschwert.

Der Erfindung liegt die Aufgabe zugrunde, für den Antrieb mindestens einer Exzenterwelle der genannten Art eine Verbesserung gegenüber dem Stand der Technik anzugeben. Insbesondere soll der Wirkungsgrad erhöht, die Dynamik der Drehzahlregelung verbessert und hydraulisches Bremsen ermöglicht werden.

Eine weitere Aufgabe der Erfindung ist es, ein verbessertes Verfahren zum Betreiben des Antriebs der Exzenterwelle anzugeben, wodurch Schallemissionen, bei Verlängerung der Lebensdauer der Stopfaggregate, verringert werden.

Erfindungsgemäß wird diese Aufgabe gelöst durch einen Antrieb für eine Exzenterwelle nach Anspruch 1 und ein Verfahren zum Betreiben dieses Antriebs nach Anspruch 10.

Abhängige Ansprüche geben vorteilhafte Ausgestaltungen der Erfindung an.

Der Erfindungsgegenstand umfasst einen Exzenterwellenantrieb mit mindestens einer Exzenterwelle, die dazu vorgesehen ist, paarweise angeordnete Schwenkhebel eines jeweils zugeordneten Stopfaggregats in Schwingungen einer definierten Grundfrequenz zu versetzen, wobei jeweils ein in einem zugordneten Hydraulikkreis angeordneter drehzahlsteuerbarer erster hydraulisch-mechanischer Aktor mit der zugeordneten Exzenterwelle mechanisch gekoppelt ist und wobei der Hydraulikkreis den zugordneten ersten hydraulisch-mechanischen Aktor mit einem zugeordneten zweiten mechanisch-hydraulischen Aktor, der über eine gemeinsame Achse mit einem Antriebsaggregat mechanisch gekoppelt ist, fluidleitend verbindet und in dem mindestens einem geschlossenen Hydraulikkreis der erste und der zweite Aktor zur Umwandlung einer mechanischen Bewegung in einen zeitlich veränderlichen Volumenstrom eines Hydraulikmediums und/oder zur Umwandlung eines zeitlich veränderlichen Volumenstromes dieses Hydraulikmediums in eine mechanische Bewegung vorgesehen sind.

In einer vorteilhaften Ausführungsform ist der zweite Aktor eine Hydraulikpumpe mit konstantem Verdrängungsvolumen.

Dabei ist es günstig, wenn das mechanisch mit diesem zweiten mechanisch-hydraulischen Aktor und insbesondere mit einer Hydraulikpumpe gekoppelte Antriebsaggregat eine Kombination aus einem elektrischen Energiespeicher, einem Umrichter und einem elektrischen Motor ist, dessen Drehzahl in einem vorgegebenen Drehzahlbereich variabel eingestellt werden kann.

Es ist günstig, wenn der elektrische Energiespeicher ein DC-Link-Kondensator ist, der beispielsweise eine Nennspannung von 800V aufweist.

Der elektrische Motor ist beispielsweise ein Servomotor.

In einer alternativen Ausführungsform ist der zweite Aktor eine Hydraulikpumpe mit variablem Verdrängungsvolumen.

Mit dieser Ausführungsform des zweiten Aktors ist vorteilhafterweise ein Antriebsaggregat mechanisch gekoppelt, dass eine Kombination aus Verbrennungskraftmaschine und Getriebe mit konstanter und/oder variabler Drehzahl ist.

Die Verbrennungskraftmaschine ist beispielsweise ein Dieselmotor.

In einer bevorzugten Variante des Erfindungsgegenstands ist der erste Aktor ein Hydraulikmotor mit veränderlicher Drehzahl.

Es ist günstig, wenn die Drehrichtung dieses Hydraulikmotors aufgrund seiner Anordnung im Hydraulikkreis und aufgrund seiner Ansteuerung umkehrbar ist.

In einer vorteilhaften Weiterbildung ist der Hydraulikmotor für einen hydraulischen Bremsvorgang eingerichtet.

Vorzugsweise ist bei dem Antrieb mindestens einer Exzenterwelle eines Stopfaggregats im geschlossenen Hydraulikkreis parallel zum ersten Aktor und insbesondere zu einem Hydraulikmotor ein Hydraulikventil angeordnet.

Dieses Hydraulikventil ist vorzugsweise mittels einer elektromagnetischen Stellvorrichtung gegen eine mechanische Federkraft kontinuierlich verstellbar, zwischen einer ersten passiven Endstellung, die den Durchfluss des Hydraulikmediums durch das Hydraulikventil vollständig sperrt, und einer zweiten aktiven Endstellung, die einen von der Ventildimension abhängigen maximalen Durchfluss des Hydraulikmediums durch das Hydraulikventil ermöglicht.

Eine günstige Weiterbildung des Antriebs sieht vor, dass eine Füllpumpe und ein Behälter für das Hydraulikmedium in einem zusätzlichen Hydraulikkreis angeordnet sind.

Dieser zusätzliche Hydraulikkreis ist mit seinen Komponenten dazu vorgesehen gegebenenfalls auftretende Leckverluste im geschlossenen Hydraulikkreis auszugleichen.

Die Einspeisestelle des zusätzlichen Hydraulikkreises am Druckanschluss der Füllpumpe ist typischerweise mit Rückschlagventilen versehen, um eine Rückströmung des Hydraulikmediums aus dem geschlossenen Hydraulikkreis, insbesondere aus der Leitung mit hohem Druckniveau, zu verhindern.

Weiters sind die beiden Leitungen des geschlossenen Hydraulikreises in der Regel durch zwei in entgegengesetzter Richtung angeordnete Druckbegrenzungsventile verbunden, um bei Überschreitung von vorgegebenen Druckgrenzwerten Hydraulikmedium von der jeweiligen Hochdruckleitung in die Leitung mit dem geringeren Druckniveau abzuleiten.

Vorzugsweise ist die Füllpumpe an die gemeinsame Achse des Antriebsaggregats und des zweiten hydraulischen Aktors mechanisch angekoppelt.

In einer bevorzugten Ausführungsform ist eine Hydraulikventilanordnung aus drei Hydraulikventilen parallel zum ersten hydraulischen Aktor im Hydraulikkreis vorgesehen, um bei Überschreiten des von dieser Hydraulikventilanordnung vorgegeben Druckgrenzwertes das Hydraulikmedium zur Kühlung teilweise durch den zusätzlichen Hydraulikkreis zu leiten.

Ein erstes Hydraulikventil dieser Hydraulikventilanordnung weist bevorzugt zwei Eingangsanschlüsse und einen Ausgangsanschluss sowie eine passiven und zwei aktive Schaltstellungen auf.

Es ist günstig, wenn ein zweites Hydraulikventil ein Drosselventil ist.

Ein weiteres Hydraulikventil der Hydraulikventilanordnung ist zur Druckbegrenzung des Hydraulikmediums mit seinem Eingangsanschluss am Ausgangsanschluss der ersten beiden Hydraulikventile angeordnet. Der Ausgangsanschluss dieses zweiten Hydraulikventils ist über das hydraulische Leitungsnetzwerk des zusätzlichen Hydraulikkreises mit dem Behälter fluidleitend verbunden.

In einer Varianten der erfindungsgemäßen Anordnung ist in der Leitung vor dem Behälter ein Kühlaggregat angeordnet, das Wärmeenergie des durchgeleiteten Hydraulikmediums zusätzlich zu in der Anordnung bereits stattfindenden Prozessen der Konvektion und Wärmestrahlung abführt und damit eine verbesserte Kühlung ermöglicht.

Es ist günstig, wenn zwischen dem Behälter und der Füllpumpe ein Filter zur Reinigung des Hydraulikmediums im zusätzlichen Hydraulikkreis angeordnet ist.

Werden zumindest zwei Stopfaggregate gemeinsam auf einem Schienenfahrzeug angeordnet, um durch das Unterstopfen der Schwellen des Gleisrostes mit Material der unter dem Gleisrost gelagerten Schotterschicht, die ein Teil des Schienenfahrwegoberbaus ist, eine fehlerhafte Gleislage zu berichtigen, so werden diese Stopfaggregate vorzugweise miteinander synchronisiert.

Dafür wird bevorzugt ein Verfahren zum Betreiben eines Antriebs für mindestens zwei Exzenterwellen von in Gleisrichtung hintereinander angeordneten Stopfaggregaten angewandt, wobei zwei zueinander benachbarte Exzenterwelle mittels den ihnen zugeordneten ersten hydraulischen Aktoren und insbesondere den Hydraulikmotoren und gegebenenfalls den zu diesen parallel angeordneten Hydraulikventilen derart angesteuert werden, dass sie einerseits mit der gleichen Drehzahl rotieren.

Anderseits erfolgen die Rotationsbewegungen der Exzenterwellen von zueinander benachbarten Stopfaggregaten gegenphasig, wodurch sich auftretende Kraftwirkungen in den Lagern und der Rahmenkonstruktion der Stopfaggregate zumindest teilweise kompensieren.

Durch diese bevorzugte Betriebsart werden ungewollte Vibrationen der Stopfaggregate vermindert. Das geschieht in effizienter Weise durch die erfindungsgemäße Anordnung eines geschlossenen Hydraulikkreises für den synchronisierten Betrieb der zumindest zwei ersten hydraulischen Aktoren.

Dadurch werden die Schallemission der im Betrieb befindlichen Gleisbaumaschine, an der die Stopfaggregate angeordnet sind, verringert.

In weiterer Folge werden die Maschinenteile, die für den Stopfzyklus nötig sind, geschont und die Wartungsintervalle werden verlängert.

Die Erfindung wird nachfolgend in beispielhafter Weise unter Bezugnahme auf die beigefügten Figuren erläutert. Es zeigen in schematischer Darstellung:
- Fig. 1: Ein Schaltschema des erfindungsgemäßen Antriebs für ein Stopfaggregat,
- Fig. 2: Ein Schaltschema einer Variante des erfindungsgemäßen Antriebs für zwei Stopfaggregate mit einem Parallelventil,
- Fig. 3: Ein Schaltschema mit dem zusätzlichen Hydraulikreis zur Filtration, Kühlung und zum Ausgleich der Leckverluste des Hydraulikmediums,
- Fig. 4: Ein Schaltschema mit einer Variante des Exzenterwellenantriebs für vier Stopfaggregate und mit zusätzlichem Hydraulikreis,
- Fig. 5: Ein Schienenfahrzeug mit einer Dreischwellen-Stopfaggregat-Anordnung,
- Fig. 6: Eine Vierschwellen-Stopfaggregat-Anordnung mit Gleisrost und Schotterschicht des Gleisoberbaus.

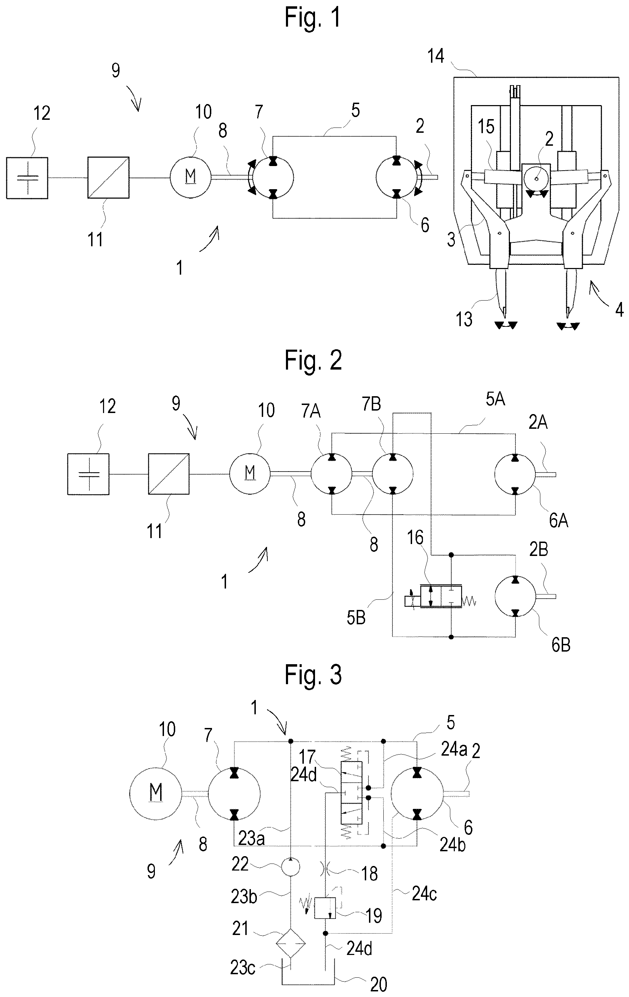

In Figur 1 ist der erfindungsgemäße Antrieb 1 für ein Stopfaggregat 4 schematisch dargestellt. Dabei wird eine Exzenterwelle 2 mittels eines hydraulisch-mechanischen Aktors 6, mit dem diese mechanisch gekoppelt ist, derart angetrieben, dass die Exzenterwelle 2, aufgrund ihres Aufbaus und wegen ihrer Anordnung zwischen zwei paarweise angeordneten Schwenkhebel 3, Schwingungen einer definierten Grundfrequenz an die Stopfpickel 13 überträgt, die an den jeweiligen unteren Enden der Schwenkhebel 3 eingespannt sind. Die mechanische Funktionseinheit aus Exzenterwelle 2, paarweise angeordneten hydraulischen Aktoren 15, Schwenkhebeln 3 und Stopfpickeln 13 kann gegenüber einem Aggregatsrahmen 14 nach unten und wieder nach oben bewegt werden, um die Stopfpickel 13 zur Bearbeitung der Schotterauflage einer Schwelle 32 in die Schotterschicht 33 abzusenken und sie nach dem Umlagern und dem Verdichten des Schotters 33 wieder aus der Schotterschicht 33 herauszuziehen.

Der hydraulisch-mechanische Aktor 6, insbesondere ein Hydraulikmotor 6, ist mittels eines geschlossenen Hydraulikkreises 5 mit einem mechanisch-hydraulischen Aktor 7 verbunden. Dieser mechanisch-hydraulische Aktor 7, insbesondere eine Hydraulikpumpe oder eine Hydraulik-PumpenMotor-Komponente ist über eine gemeinsame Achse 8 mit einem Antriebsaggregat 9 mechanisch gekoppelt.

Dieses Antriebsaggregat 9 besteht in Figur 1 aus einem elektrische Energiespeicher 12, insbesondere einem DC-Link Kondensator, einem Umrichter 11 sowie aus einem elektrischen Motor 10, dessen Drehzahl zwischen einem unteren Drehzahlgrenzwert und einem oberen Drehzahlgrenzwert verstellt werden kann.

In einer ersten Betriebsart wird, über die vom Antriebsaggregat 9 dem hydraulischen Aktor 7 zugeführten mechanische Energie, ein zeitlich veränderlicher Volumenstrom im geschlossenen Hydraulikkreis 5 erzeugt und am Ausgang mittels des hydraulischen Aktors 6 an die Exzenterwelle 2 übertragen. Wird die Drehzahl des Gleichstrommotors 10 verändert, ändert sich das Volumenstromregime des geschlossenen Hydraulikkreises 5 und somit auch die Drehzahl der Exzenterwelle 2, wodurch die Grundfrequenz der an die Stopfpickel 13 übertragenen Schwingungen in einem definierten Frequenzbereich, beispielsweise zwischen 28Hz und 45Hz, eingestellt werden kann.

Durch Reduzierung der Drehzahl der gemeinsamen Achse 8 von Antriebsaggregat 9 und hydraulischen Aktor 7 kann der Volumenstrom des Hydraulikmediums im geschlossenen Hydraulikkreis 5 verringert werden und die Bewegung des hydraulischen Aktors 6 wird entsprechend abgebremst.

Durch Umkehr der Drehrichtung der gemeinsamen Achse von Antriebsaggregat 9 und zweitem hydraulischen Aktor 7 kann die Strömungsrichtung des Hydraulikmediums im geschlossenen Hydraulikreis 5 umgekehrt werden, wodurch sich die Drehrichtung des ersten hydraulischen Aktors 6 ändert.

In einer weiteren Betriebsart kann die mechanische Bewegungsenergie der Schwenkhebel 3 des Stopfaggregats 4 durch den hydraulischen Aktor 6 in eine Veränderung des Volumenstroms im geschlossenen hydraulischen Kreis 5 umgewandelt werden, wodurch die Schwingungsbewegung gedämpft und der hydraulische Aktor 6 gebremst wird.

In Figur 2 ist eine Erweiterung des Antriebsschemas von Figur 1 auf den Antrieb von Exzenterwellen für zwei Stopfaggregate dargestellt.

Dabei sind die beiden zweiten hydraulischen Aktoren 7A und 7B über eine gemeinsame Antriebswelle 8 mit dem Gleichstrommotor 10 des Antriebsaggregats 9 verbunden.

Dieses Antriebsaggregat 9 umfasst neben dem elektrischen Motor 10 auch einen Umrichter 11 und einen elektrischen Energiespeicher 12.

Der eine zweite hydraulische Aktor 7A ist mittels eines ersten geschlossenen Hydraulikkreises 5A fluidleitend verbunden mit einem ersten hydraulischen Aktor 6A, der auf die Stopfpickel des ihm zugeordneten Stopfaggregats mit Hilfe der Exzenterwelle 2A eine Schwingung einstellbarer Grundfrequenz mechanisch überträgt.

Der andere zweite hydraulische Aktor 7B ist auf die gleiche Weise mittels eines zweiten geschlossenen Hydraulikkreises 5B mit einem weiteren ersten hydraulischen Aktor 6B fluidleitend verbunden. Parallel zu diesem hydraulischen Aktor ist das 2/2-Wegeventil 16 angeordnet.

Durch Aufteilen des gesamten Volumenstroms des Hydraulikmediums des Hydraulikkreises 5B auf den weiteren ersten hydraulischen Aktor 6B und das Ventil 16 kann eine Phasenverschiebung der Drehbewegung der Exzenterwelle 2B gegenüber jener der Exzenterwelle 2A eingestellt werden.

Es kann in einer weiteren nicht dargestellten Ausführungsform ein weiteres Ventil 16 auch parallel zum zweiten hydraulischen Aktor 6A im ersten Hydraulikkreis 5A angeordnet werden.

Eine Phasenverschiebung zwischen den Drehbewegungen der beiden Exzenterwellen 2A und 2B führt zu einer Phasenverschiebung zwischen den mittels der Exzenterwellen 2A und 2B auf die Stopfaggregate 4 und insbesondere deren Schwenkhebel 3 und Stopfpickel 13 übertragenen Schwingungen.

Dadurch können aufgrund von Unwucht oder Asymmetrie in der Ausführung benachbarter Stopfaggregate 14 auftretende Kraftwirkungen ganz oder zumindest teilweise kompensiert werden.

In Figur 3 ist ein zusätzlicher Hydraulikkreis 23a, 23b, 23c, 24a, 24b, 24c und 24d im Schaltschema eines erfindungsgemäßen Exzenterwellenantriebs 1 dargestellt, der einerseits dazu dient einen Schwund des Hydraulikmediums im geschlossenen Hydraulikkreis 5 aufgrund von Leckströmen mit aus einem Behälter 20 mittels der Hydraulikpumpe 22 geförderten Hydraulikmedium auszugleichen.

Andererseits wird das Hydraulikmedium aus dem geschlossenen Hydraulikkreis 5 mit Hilfe der Ventilanordnung 17, 18 und 19 und den hydraulischen Leitungen 24a, 24b und 24d sowie aus dem ersten hydraulischen Aktor 6 mittels der hydraulischen Leitung 24c in definierten Betriebsfällen entnommen, beispielsweise wenn die Temperatur des Hydraulikmediums einen festgesetzten Grenzwert überschreitet oder wenn der Druck des Hydraulikmediums einen zulässigen Betriebsbereich verlässt, und mittels der Leitungen 24a, 24b, 24c und 24d in den Behälter 20 geleitet.

Aus dem Behälter 20 wird das Hydraulikmedium mittels der Pumpe 22 und den Leitungen 23a, 23b und 23c wieder in den Hydraulikkreislauf 5 eingebracht, wobei ein Filter 21, das zwischen dem Behälter 20 und der Pumpe 22 angeordnet ist, dazu vorgesehen ist, das Hydraulikmedium von metallischen Partikeln oder anderen Verschmutzungen zu reinigen.

Die Ventilanordnung besteht dabei aus einem ersten Ventil 17 mit einer passiven und zwei aktiven Schaltstellungen, einem Drosselventil 18 und einem einstufigen Druckbegrenzungsventil 19.

Das Ventil 17, das auch als 3/3 Wegeventil bezeichnet wird, wird mittels zwei Federn in der passiven mittleren Schaltstellung gehalten, in der die parallel zu der Zu- und Ableitung vom ersten hydraulischen Aktor 6 des Hydraulikkreises 5 angeordneten Leitungen 24a und 24b des zusätzlichen Hydraulikkreises 23a-c und 24a-d vollständig von der Leitung 24d getrennt sind.

Wenn das Hydraulikmedium einen definierten Druckbereich für den zuverlässigen Betrieb verlässt, so wechselt das Ventil 17 von der passiven Schaltstellung in eine der beiden aktiven Schaltstellungen, wobei der Betätigungsmechanismus des Ventils 17 dabei gegen eine der beiden Federn Arbeit verrichtet.

Dabei wird durch das Ventil 17 Hydraulikmedium aus jener Hydraulikleitung 24a oder 24b entnommen, die jeweils gegenüber der anderen das geringere Druckniveau aufweist.

In einer ersten aktiven Schaltstellung des Ventils 17 wird dabei der Hydraulikkreis 5 über die Leitung 24a des zusätzlichen Hydraulikkreises 23a-c, 24a-d fluidleitend mit der Leitung 24d verbunden, die das Hydraulikmedium über das Drosselventil 18 und das Druckbegrenzungsventil 19 in den Behälter 20 leitet.

Das Druckbegrenzungsventil 19 spricht dabei beim Überschreiten eines definierten Druckwertes des Hydraulikmediums an und verbindet den Ausgang des Drosselventils 18 fluidleitend mit dem Behälter 20.

In der zweiten aktiven Schaltstellung wird andererseits der Hydraulikkreis 5 über die Leitung 24b des zusätzlichen Hydraulikkreises 23a-c, 24a-d mit der Leitung 24d verbunden, um bei Erreichen eines Druckwerts des Hydraulikmediums außerhalb eines definierten zulässigen Betriebsbereichs, der beispielsweise durch eine zu hohe Temperatur des Hydraulikmediums verursacht ist oder gemeinsam mit dieser auftritt, und durch das Druckbegrenzungsventil 19 vorgegeben ist, eine fluidleitende Verbindung zwischen Hydraulikkreis 5 und Behälter 20 herzustellen.

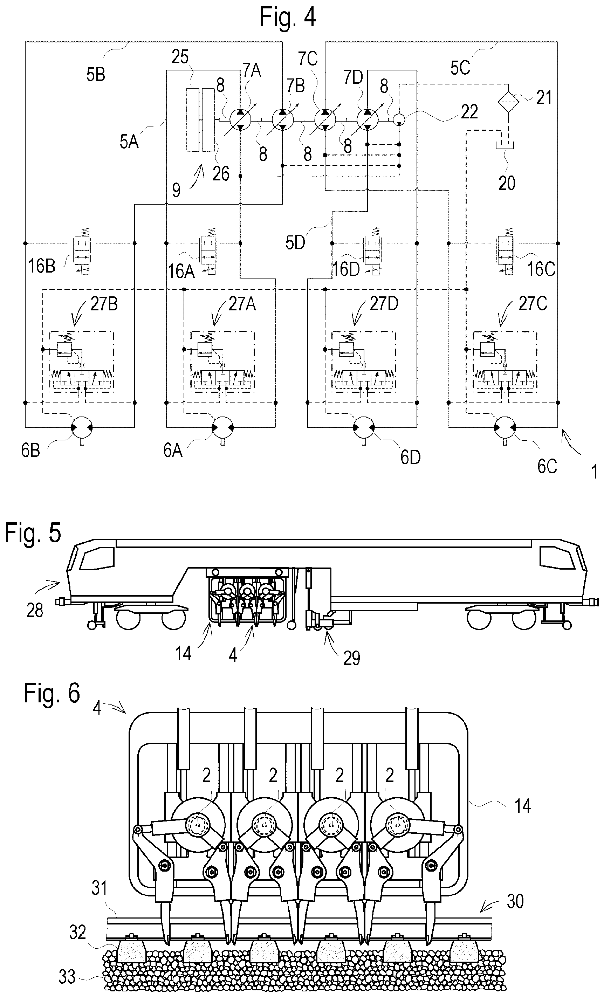

In Figur 4 ist schließlich das Schaltschema für einen Exzenterwellenantrieb 1 für vier auf einem Schienenfahrzeug 28 hintereinander angeordneten Stopfaggregate 4 oder für vier Stopfeinheiten, die in einem gemeinsamen Aggregatrahmen 14 angeordnet sind, dargestellt.

Alternativ zu den Ausführungsformen der Figuren 1 bis 3 besteht das Antriebsaggregat aus einem Dieselmotor 25 und einem zwischen Dieselmotor 25 und den hydraulischen Aktoren 7A bis 7D angeordneten Getriebe 26.

Sowohl die zweiten mechanisch-hydraulischen Aktoren 7A bis 7D, die bei dieser Ausführungsform Hydraulikpumpen mit variablen Verdrängungsvolumen sind, als auch die Hydraulikpumpe 22 des zusätzlichen Hydraulikkreises 23a-c, 24a-d sind über eine gemeinsame Antriebswelle 8 mechanisch mit der Abtriebswelle des Getriebes 25 verbunden.

In den insgesamt vier geschlossenen Hydraulikkreisen 5A, 5B, 5C und 5D, die die zweiten mechanisch-hydraulischen Aktoren 7A, 7B, 7C und 7D mit den ersten hydraulisch-mechanischen Aktoren 6A, 6B, 6C und 6D fluidleitend verbinden, sind Hydraulikventile 16A, 16B, 16C und 16D jeweils parallel zu den hydraulischen Aktoren 6A, 6B, 6C, 6D und 7A, 7B, 7C, 7D angeordnet, mit denen bei geeigneter Ansteuerung eine Phasenverschiebung zwischen den auf die Exzenterwellen 2 benachbarter Stopfeinheiten 4 übertragene Drehbewegungen eingestellt werden kann.

Diese Phasenverschiebung kann beispielsweise 180° betragen.

Leckströme des in den hydraulischen Aktoren 6A, 6B, 6C und 6D wirkenden Hydraulikmediums werden mittels des zusätzlichen Hydraulikkreises direkt in den Behälter 20 abgeleitet, die Ventilanordnungen 27A, 27B, 27C und 27D stellen eine fluidleitende Verbindung zwischen den Hydraulikkreisen 5A, 5B, 5C und 5D und dem Behälter 20 her.

Durch entsprechende Einstellungen der Ventilanordnungen 27A, 27B, 27C oder 27D werden dabei jene Druckwerte vorgegeben bei denen Hydraulikmedium zur Kühlung und Reinigung in den Behälter 20 geleitet wird.

Die Leckstromverluste, aber auch das zur Reinigung und Kühlung entnommene Hydraulikmedium, werden mit Hydraulikmedium aus dem Behälter 20 ergänzt, das mittels der Hydraulikpumpe 22 nach Reinigung durch das Filter 21 in die jeweiligen geschlossen Hydraulikkreise 5A, 5B, 5C und 5D geleitet wird.

Figur 5 zeigt ein Schienenfahrzeug 28, das insbesondere zum Gleisbau oder zur Gleisinstandhaltung eingerichtet ist, mit einer Anordnung von drei in Arbeits- bzw. Fahrtrichtung hintereinander angeordneten Stopfeinheiten 4 in einem gemeinsamen Aggregatrahmen 14. Diese Stopfeinheiten 4 eignen sich zum gleichzeitigen Stopfen mehrerer Schwellen 32, wobei aus dem im Stand der Technik verschiedene Betriebsarten bekannt sind, die sowohl die Stopfpickel 13 der Stopfeinheiten 4 als auch den bearbeiteten Schotter 33 der Schotterschicht 33 des Gleisoberbaus schonen.

Fig 6. zeigt ein Mehrschwellenstopfaggregats 4 mit einem kurzen Schienenfahrwegabschnitt 30 aus Schienen 31 und Schwellen 32 sowie einer Schotterschicht 33.

Das dargestellte Mehrschwellenstopfaggregat eignet sich für das gleichzeitige Unterstopfen von bis zu vier Schwellen 32. Die Exzenterwellen 2 der vier nebeneinander in einem gemeinsamen Aggregatrahmen 14 angeordneten Stopfeinheiten 4 werden beispielsweise mit dem Exzenterwellenantrieb 1 der Figur 4 angesteuert.

Der Erfindungsgegenstand ist nicht auf die beschriebenen Ausführungsformen beschränkt, sondern umfasst durch die Ansprüche insbesondere auch andere als die dargestellten Kombinationen aus Antriebsaggregaten 9 und hydraulischen Aktoren 6 und 7, die über geschlossene Hydraulikkreise 5 miteinander verbunden sind, sowohl für Einschwellen- als auch für Mehrschwellen-Stopfaggregate 4.

## Patentansprüche

1. Exzenterwellenantrieb (1) von Stopfaggregaten (4) mit zumindest einer Exzenterwelle (2, 2A, 2B), die dazu vorgesehen ist, paarweise angeordnete Schwenkhebel (3) eines jeweils zugeordneten Stopfaggregats (4) in Schwingungen einer definierten Grundfrequenz zu versetzen, wobei jeweils ein in einem zugordneten Hydraulikkreis (5, 5A, 5B, 5C, 5D) angeordneter drehzahlsteuerbarer erster hydraulisch-mechanischer Aktor (6, 6A, 6B, 6C, 6D) mit der zugeordneten Exzenterwelle (2, 2A, 2B) mechanisch gekoppelt ist, **dadurch gekennzeichnet, dass** der Hydraulikkreis (5, 5A, 5B, 5C, 5D) geschlossen ausgebildet ist und den zugordneten ersten hydraulisch-mechanischen Aktor (6, 6A, 6B, 6C, 6D) mit einem zugeordneten zweiten mechanisch-hydraulischen Aktor (7, 7A, 7B, 7C, 7D), der über eine gemeinsame Achse (8) mit einem Antriebsaggregat (9) mechanisch gekoppelt ist, fluidleitend verbindet und dass in dem geschlossenen Hydraulikkreis (5, 5A, 5B, 5C, 5D) der erste und der zweite Aktor (6, 6A, 6B, 6C, 6D, 7, 7A, 7B, 7C, 7D) zur Umwandlung einer mechanischen Bewegung in einen zeitlich veränderlichen Volumenstrom eines Hydraulikmediums und/oder zur Umwandlung eines zeitlich veränderlichen Volumenstromes dieses Hydraulikmediums in eine mechanische Bewegung vorgesehen sind.

2. Antrieb (1) nach Anspruch 1, **dadurch gekennzeichnet, dass** der zweite Aktor (7, 7A, 7B, 7C, 7D) eine Hydraulikpumpe mit konstantem Verdrängungsvolumen ist und dass das mechanisch gekoppelte Antriebsaggregat (9) eine Kombination aus elektrischem Energiespeicher (12), Umrichter (11) und elektrischer Motor (10) mit variabler Drehzahl ist.

3. Antrieb (1) nach Anspruch 1, **dadurch gekennzeichnet, dass** der zweite Aktor (7, 7A, 7B, 7C, 7D) eine Hydraulikpumpe mit variablem Verdrängungsvolumen ist und dass das mechanisch gekoppelte Antriebsaggregat (9) eine Kombination aus Verbrennungskraftmaschine (25) und Getriebe (26) mit konstanter und/oder variabler Drehzahl ist.

4. Antrieb (1) nach einem der Ansprüche 1 bis 3, **dadurch gekennzeichnet, dass** der erste Aktor (6, 6A, 6B, 6C, 6D) ein Hydraulikmotor mit veränderlicher Drehzahl ist, dessen Drehrichtung umkehrbar ist, und der für einen hydraulischen Bremsvorgang eingerichtet ist.

5. Antrieb (1) nach einem der Ansprüche 1 bis 4, **dadurch gekennzeichnet, dass** im geschlossenen Hydraulikkreis (5, 5A, 5B, 5C, 5D) parallel zum ersten Aktor (6, 6A, 6B, 6C, 6D) ein Hydraulikventil (16, 16A, 16B, 16C, 16D) angeordnet ist.

6. Antrieb (1) nach einem der Ansprüche 1 bis 5, **dadurch gekennzeichnet, dass** eine Füllpumpe (22) und ein Behälter (20) für das Hydraulikmedium in einem zusätzlichen Hydraulikkreis (23a-c, 24a-d) angeordnet sind, um Leckverluste des geschlossenen Hydraulikkreises (5, 5A, 5B, 5C, 5D) auszugleichen.

7. Antrieb (1) nach dem Anspruch 6, **dadurch gekennzeichnet, dass** die Füllpumpe (22) an die gemeinsame Achse (8) des Antriebsaggregats (9) und des zweiten hydraulischen Aktors (7, 7A, 7B, 7C, 7D) oder der zweiten hydraulischen Aktoren (7, 7A, 7B, 7C, 7D) mechanisch angekoppelt ist.

8. Antrieb (1) nach einem der Ansprüche 1 bis 7, **dadurch gekennzeichnet, dass** eine Hydraulikventilanordnung (27A, 27B, 27C, 27D) aus drei Hydraulikventilen (17, 18, 19) parallel zum ersten hydraulischen Aktor (6, 6A, 6B, 6C, 6D) im Hydraulikkreis (5, 5A, 5B, 5C, 5D) vorgesehen ist, das Hydraulikmedium zur Kühlung teilweise durch den zusätzlichen Hydraulikkreis (23a-c, 24a-d) zu leiten, wobei ein Hydraulikventil (19) zur Druckbegrenzung des Hydraulikmediums am Ausgangsanschluss der beiden anderen Hydraulikventile (17, 18) angeordnet ist.

9. Antrieb (1) nach einem der Ansprüche 6 bis 8, **dadurch gekennzeichnet, dass** zwischen dem Behälter (20) und der Füllpumpe (22) ein Filter (21) zur Reinigung des Hydraulikmediums im zusätzlichen Hydraulikkreis (23a-c, 24a-d) angeordnet ist.

10. Verfahren zum Betreiben eines Antriebs (1) nach einem der Ansprüche 1 bis 9, **dadurch gekennzeichnet, dass** zwei zueinander benachbarte Exzenterwelle (2, 2A, 2B) mittels den ihnen zugeordneten ersten hydraulischen Aktoren (6, 6A, 6B, 6C, 6D) und gegebenenfalls den zu diesen parallel angeordneten Hydraulikventilen (16, 16A, 16B, 16C, 16D) derart angesteuert werden, dass sie mit der gleichen Drehzahl aber zueinander gegenphasig rotieren.

## Claims

1. An eccentric shaft drive (1) with at least one eccentric shaft (2, 2A, 2B), which is provided for setting tilting levers (3) arranged in pairs of a respectively associated tamping unit (4) into vibrations of a defined fundamental frequency, with a first hydraulic-mechanical actuator (6, 6A, 6B, 6C, 6D) arranged in an associated hydraulic circuit (5, 5A, 5B, 5C, 5D) and controllable in terms of rotational speed being mechanically coupled to the associated eccentric shaft (2, 2A, 2B), **characterized in that** the hydraulic circuit (5, 5A, 5B, 5C, 5D) is designed closed and fluidly connecting the associated first hydraulic-mechanical actuator (6, 6A, 6B, 6C, 6D) to an associated second mechanical-hydraulic actuator (7, 7A, 7B, 7C, 7D), which is mechanically coupled to a drive unit (9) via a common axle (8), and **in that** in the closed hydraulic circuit (5, 5A, 5B, 5C, 5D) the first and the second actuator (6, 6A, 6B, 6C, 6D, 7, 7A, 7B, 7C, 7D) are provided for converting a mechanical movement into a time-variable volume flow of a hydraulic medium and/or for converting a time-variable volume flow of this hydraulic medium into a mechanical movement.

2. A drive (1) according to claim 1, **characterized in that** the second actuator (7, 7A, 7B, 7C, 7D) is a hydraulic pump with a constant displacement volume and that the mechanically coupled drive unit (9) is a combination of an electrical energy storage (12), a converter (11), and an electric motor (10) with variable rotational speed.

3. A drive (1) according to claim 1, **characterized in that** the second actuator (7, 7A, 7B, 7C, 7D) is a hydraulic pump with a variable displacement volume and that the mechanically coupled drive unit (9) is a combination of an internal combustion engine (25) and a gearbox (26) with constant and/or variable rotational speed.

4. A drive (1) according to one of the claims 1 to 3, **characterized in that** the first actuator (6, 6A, 6B, 6C, 6D) is a hydraulic motor with variable rotational speed whose direction of rotation can be reversed and which is set up for a hydraulic braking process.

5. A drive (1) according to one of the claims 1 to 4, **characterized in that** a hydraulic valve (16, 16A, 16B, 16C, 16D) is arranged parallel to the first actuator (6, 6A, 6B, 6C, 6D) in the closed hydraulic circuit (5, 5A, 5B, 5C, 5D).

6. A drive (1) according to one of the claims 1 to 5, **characterized in that** a filling pump (22) and a tank (20) for the hydraulic medium are arranged in an additional hydraulic circuit (23a-c, 24a-d) in order to compensate for leakage losses in the closed hydraulic circuit (5, 5A, 5B, 5C, 5D).

7. A drive (1) according to claim 6, **characterized in that** the filling pump (22) is mechanically coupled to the common axle (8) of the drive unit (9) and the second hydraulic actuator (7, 7A, 7B, 7C, 7D) or the second hydraulic actuators (7, 7A, 7B, 7C, 7D).

8. A drive (1) according to one of the claims 1 to 7, **characterized in that** a hydraulic valve arrangement (27A, 27B, 27C, 27D) of three hydraulic valves (17, 18, 19) is provided parallel to the first hydraulic actuator (6, 6A, 6B, 6C, 6D) in the hydraulic circuit (5, 5A, 5B, 5C, 5D), partially passing the hydraulic medium through the additional hydraulic circuit (23a-c, 24a-d) for cooling, with a hydraulic valve (19) being arranged on the outlet connection of the two other hydraulic valves (17, 18) to limit the pressure of the hydraulic medium.

9. A drive (1) according to one of the claims 6 to 8, **characterized in that** a filter (21) for cleaning the hydraulic medium is arranged in the additional hydraulic circuit (23a-c, 24a-d) between the tank (20) and the filling pump (22).

10. A method for operating a drive (1) according to one of the claims 1 to 9, **characterized in that** two eccentric shafts (2, 2A, 2B) adjacent to one another are actuated by means of the first hydraulic actuators (6, 6A, 6B, 6C, 6D) associated with them and, optionally, the hydraulic valves (16, 16A, 16B, 16C, 16D) arranged parallel to them in such a way that they rotate at the same rotational speed but in phase opposition to one another.

## Revendications

1. Entraînement à arbre excentrique (1) de modules de bourrage (4) avec au moins un arbre excentrique (2, 2A, 2B) qui est prévu pour mettre en oscillations d'une fréquence de base définie des leviers de pivotement disposés par paire (3) d'un module de bourrage respectivement associé (4), dans lequel un premier actionneur hydraulique-mécanique (6, 6A, 6B, 6C, 6D) à vitesse de rotation pouvant être commandée, disposé dans un circuit hydraulique associé (5, 5A, 5B, 5C, 5D) est à chaque fois couplé mécaniquement à l'arbre excentrique associé (2, 2A, 2B), **caractérisé en ce que** le circuit hydraulique (5, 5A, 5B, 5C, 5D) est réalisé de manière fermée et connecte en dirigeant du fluide le premier actionneur à mécanique hydraulique associé (6, 6A, 6B, 6C, 6D) à un second actionneur mécanique-hydraulique associé (7, 7A, 7B, 7C, 7D) qui est couplé mécaniquement à un module d'entraînement (9) par le biais d'un essieu commun (8), et que le premier et le second actionneur (6, 6A, 6B, 6C, 6D, 7, 7A, 7B, 7C, 7D) sont prévus dans le circuit hydraulique fermé (5, 5A, 5B, 5, 5D) pour la conversion d'un mouvement mécanique en un courant volume variable dans le temps d'un milieu hydraulique et/ou pour la conversion d'un courant volumique variable dans le temps de ce milieu hydraulique en un mouvement mécanique.

2. Entraînement (1) selon la revendication 1, **caractérisé en ce que** le second actionneur (7, 7A, 7B, 7C, 7D) est une pompe hydraulique à volume de refoulement constant et que le module d'entraînement à couplage mécanique (9) est une combinaison d'un accumulateur d'énergie électrique (12), d'un onduleur (11) et d'un moteur électrique (10) à vitesse de rotation variable.

3. Entraînement (1) selon la revendication 1, **caractérisé en ce que** le second actionneur (7, 7A, 7B, 7C, 7D) est une pompe hydraulique à volume de refoulement variable et que le module d'entraînement à couplage mécanique (9) est une combinaison d'un moteur à combustion interne (25) et d'un engrenage (26) à vitesse de rotation constante et/ou variable.

4. Entraînement (1) selon une des revendications 1 à 3, **caractérisé en ce que** le premier actionneur (6, 6A, 6B, 6C, 6D) est un moteur hydraulique à vitesse de rotation variable dont le sens de rotation peut être inversé et qui est configuré pour un processus de freinage hydraulique.

5. Entraînement (1) selon une des revendications 1 à 4, **caractérisé en ce qu'**une soupape hydraulique (16, 16A, 16B, 16C, 16D) est disposée parallèlement au premier actionneur (6, 6A, 6B, 6C, 6D) dans le circuit hydraulique fermé (5, 5A, 5B, 5C, 5D).

6. Entraînement (1) selon une des revendications 1 à 5, **caractérisé en ce qu'**une pompe de remplissage (22) et un récipient (20) pour le milieu hydraulique sont disposés dans un circuit hydraulique supplémentaire (23a à c, 24a à d) pour compenser des pertes de fuite du circuit hydraulique fermé (5, 5A, 5B, 5C, 5D).

7. Entraînement (1) selon la revendication 6, **caractérisé en ce que** la pompe de remplissage (22) est attelée mécaniquement à l'essieu commun (8) du module d'entraînement (9) et du second actionneur hydraulique (7, 7A, 7B, 7C, 7D) ou des seconds actionneurs hydrauliques (7, 7A, 7B, 7C, 7D).

8. Entraînement (1) selon une des revendications 1 à 7, **caractérisé en ce qu'**un agencement de soupapes hydrauliques (27A, 27B, 27C, 27D) constitué de trois soupapes hydrauliques (17, 18, 19) est prévu parallèlement au premier actionneur hydraulique (6, 6A, 6B, 6C, 6D) dans le circuit hydraulique (5, 5A, 5B, 5C, 5D) pour diriger le milieu hydraulique pour le refroidissement partiellement à travers le circuit hydraulique supplémentaire (23a à c, 24a à d), dans lequel une soupape hydraulique (19) est disposée sur le raccord de sortie des deux autres soupapes hydrauliques (17, 18) pour la limitation de pression du milieu hydraulique.

9. Entraînement (1) selon une des revendications 6 à 8, **caractérisé en ce qu'**un filtre (21) pour le nettoyage du milieu hydraulique dans le circuit hydraulique supplémentaire (23a à c, 24a à d) est disposé entre le récipient (20) et la pompe de remplissage (22).

10. Procédé d'exploitation d'un entraînement (1) selon une des revendications 1 à 9, **caractérisé en ce que** deux arbres excentriques voisins l'un de l'autre (2, 2A, 2B) sont commandés au moyen des premiers actionneurs hydrauliques (6, 6A, 6B, 6C, 6D) qui leur sont associés et éventuellement des soupapes hydrauliques (16, 16A, 16B, 16C, 16D) disposées parallèlement à ceux-ci de telle sorte qu'ils tournent à la même vitesse de rotation mais à phase opposée l'un par rapport à l'autre.
